(19) Europäisches Patentamt / European Patent Office / Office européen des brevets

(11) **EP 4 153 672 B1**

(12) **EUROPÄISCHE PATENTSCHRIFT**

(45) Veröffentlichungstag und Bekanntmachung des Hinweises auf die Patenterteilung:
**05.03.2025   Patentblatt 2025/10**

(21) Anmeldenummer: **21727794.6**

(22) Anmeldetag: **17.05.2021**

(51) Internationale Patentklassifikation (IPC):
**C08K 5/01** *(2006.01)*    **C08K 5/05** *(2006.01)*
**C08L 91/06** *(2006.01)*    **F16F 9/52** *(2006.01)*
**C09K 5/06** *(2006.01)*

(52) Gemeinsame Patentklassifikation (CPC):
(C-Sets verfügbar)
**C08L 91/06; C08K 5/005; C08K 5/05; C09K 5/063;**
F16F 9/02                                      (Forts.)

(86) Internationale Anmeldenummer:
**PCT/EP2021/063016**

(87) Internationale Veröffentlichungsnummer:
**WO 2021/233841 (25.11.2021 Gazette 2021/47)**

(54) **GASDRUCKFEDER MIT EINEM DEHNWACHS, ANTRIEBSSYSTEM MIT DER GASDRUCKFEDER**

GAS SPRING HAVING AN EXPANSION WAX, DRIVE SYSTEM HAVING THE GAS SPRING

RESSORT À GAZ PRÉSENTANT UNE CIRE D'EXPANSION, SYSTÈME D'ENTRAÎNEMENT POURVU DU RESSORT À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2020   DE 102020113749**

(43) Veröffentlichungstag der Anmeldung:
**29.03.2023   Patentblatt 2023/13**

(73) Patentinhaber: **STABILUS GmbH**
**56070 Koblenz (DE)**

(72) Erfinder:
• **PROBST, Ulrich**
  **56204 Hilscheid (DE)**
• **REISER, Alexander**
  **56294 Münstermaifeld (DE)**
• **SCHLEICH, Martin**
  **56648 Saffig (DE)**
• **BEIB, Felix**
  **56070 Koblenz (DE)**

(74) Vertreter: **Bernsmann, Falk et al**
**Preusche & Partner Patent- und Rechtsanwälte mbB**
**Schlossstraße 1**
**56068 Koblenz (DE)**

(56) Entgegenhaltungen:
EP-A2- 1 795 777    EP-B1- 1 795 777
DE-A1- 2 511 289    DE-A1- 3 141 295
US-A- 3 782 121     US-A- 4 613 115

• **ANONYMOUS: "Rubitherm RT35 Data sheet", 9 October 2020 (2020-10-09), pages 1 - 1, XP055831145, Retrieved from the Internet <URL:https://www.rubitherm.eu/media/products/datasheets/Techdata_-RT35_EN_09102020.PDF> [retrieved on 20210810]**
• **ANONYMOUS: "Dilavest, thermostat waxes", 1 March 2019 (2019-03-01), pages 1 - 3, XP055831148, Retrieved from the Internet <URL:https://www.paramelt.com/wp-content/uploads/2019/03/Dilavest-product-leaflet-2012_04.pdf> [retrieved on 20210810]**

- ANONYMOUS: "MAHLE Behr GmbH & Co. KG", 30 September 2020 (2020-09-30), pages 1 - 3, XP055831140, Retrieved from the Internet <URL:https://de.wikipedia.org/wiki/Mahle_Behr> [retrieved on 20210810]
- ANONYMOUS: "Hydraulic cylinders - THERMACT - Orbesenteknik", 1 January 2018 (2018-01-01), DK-4550 Asnaes, Denmark, pages 1 - 4, XP055831284, Retrieved from the Internet <URL:https://orbesenteknik.com/thermact/> [retrieved on 20210810]
- ANONYMOUS: "Thermact, Ventilation non-electric", 1 January 2018 (2018-01-01), pages 1 - 1, XP055831290, Retrieved from the Internet <URL:https://orbesenteknik.com/wp-content/uploads/2015/10/ds_thermact_gb_general_description.pdf> [retrieved on 20210810]
- ANONYMOUS: "Ventilation ohne Strom (Nova-Air System), preliminary Datasheet", 13 May 1998 (1998-05-13), pages 1 - 1, XP055831293, Retrieved from the Internet <URL:https://orbesenteknik.com/wp-content/uploads/2015/10/ds_thermact_de_wax_e20d_novaair.pdf> [retrieved on 20210810]
- SHAW DAVID ET AL: "ALCOHOLS WITH HYDROCARBONS", SOLUBILITY DATA SERIES, INTERNATIONAL UNION OF PURE AND APPLIED CHEMISTRY, ANALYTICAL CHEMISTRY DIVISION, COMMISSION ON SOLUBILITY DATA, 1 January 1994 (1994-01-01), pages 1 - 320, XP055830922, Retrieved from the Internet <URL:https://www.worldcat.org/title/alcohols-with-hydrocarbons/oclc/32014456>
- ANONYMOUS: "Wax", 19 July 2021 (2021-07-19), pages 1 - 6, XP055831264, Retrieved from the Internet <URL:https://en.wikipedia.org/wiki/Wax> [retrieved on 20210810]
- STEPHEN M MUDGE: "Fatty Alcohols - a review of their natural synthesis and environmental distribution", THE SOAP AND DETERGENT ASSOCIATION, 1 November 2005 (2005-11-01), XP055141697
- SILVA PEDRO M. ET AL: "Modulation and Characterization of Wax-Based Olive Oil Organogels in View of Their Application in the Food Industry", GELS, vol. 7, no. 1, 28 January 2021 (2021-01-28), pages 1 - 18, XP055831578, DOI: 10.3390/gels7010012
- KANYA ET AL: "Characterization of wax esters, free fatty alcohols and free fatty acids of crude wax from sunflower seed oil refineries", FOOD CHEMISTRY, ELSEVIER LTD, NL, vol. 101, no. 4, 1 January 2007 (2007-01-01), pages 1552 - 1557, XP005710467, ISSN: 0308-8146, DOI: 10.1016/J.FOODCHEM.2006.04.008

(52) Gemeinsame Patentklassifikation (CPC): (Forts.)

C-Sets
C08K 5/005, C08L 91/06;
C08K 5/05, C08L 91/06;
C08L 91/06, C08K 5/01, C08K 5/05;
C08L 91/06, C08K 5/05

## Beschreibung

### Technisches Gebiet

Die Erfindung betrifft eine Gasdruckfeder mit einem Dehnwachs als Ausgleichsmedium zur Verringerung einer Temperaturabhängigkeit einer Federkraft der Gasdruckfeder in einem sich von einer Minimaltemperatur bis zu einer Maximaltemperatur erstreckenden Arbeitstemperaturbereich der Gasdruckfeder.

Die Erfindung betrifft ferner ein Antriebssystem für eine Klappe mit einer Gasdruckfeder zur Unterstützung der Klappe und einem elektromechanischen Antrieb zum Antrieb der Klappe.

### Stand der Technik

Bei Gasdruckfedern ergibt sich dadurch, dass der Druck des verwendeten Arbeitsgases (im Fall eines idealen Arbeitsgases linear) mit der Temperatur ansteigt, eine Gasfedercharakteristik mit einer temperaturabhängigen Federkraft. In vielen Anwendungsfällen, beispielsweise bei Antriebssystemen für Klappen, insbesondere Fahrzeugklappen, ist jedoch eine temperaturunabhängige Federkraft gewünscht. Daher sind aus dem Stand der Technik Gasdruckfedern bekannt, die dazu ausgelegt sind, die Temperaturabhängigkeit der Gasfedercharakteristik mit Hilfe eines Ausgleichsmediums zu kompensieren.

Dazu umfasst die Gasdruckfeder beispielsweise wie in EP 1 795 777 A2 beschrieben einen Arbeitszylinder, der zusammen mit einer Ausgleichskolbenanordnung einen mit einem Arbeitsmedium gefüllten Arbeitsraum umgrenzt, und einer Arbeitsstange, die durch eine Öffnung des Arbeitszylinders verschiebbar in den Arbeitsraum hineinragt. Dabei wird die Ausgleichskolbenanordnung von dem Druck des Arbeitsmediums und dem Druck des in einem Ausgleichsraum vorgesehenen, sich bei Temperaturerhöhung ausdehnenden Ausgleichsmediums in einem das Volumen des Arbeitsraum vergrößernden Sinne beaufschlagt. Damit der Ausgleichskolben bei einer Temperaturverringerung reversibel in seine Ausgangsposition zurückkehrt, kann er außerdem von einem in einem Rückstellraum vorgesehenen Rückstellmedium in einem das Volumen des Arbeitsraum verkleinernden Sinne beaufschlagt sein.

Hinsichtlich der als Ausgleichsmedium einsetzbaren Stoffe verweist DE 31 41 295 A1 ganz pauschal auf eine "spezielle Flüssigkeit". Demgegenüber ist in der dem gleichen Sachgebiet entstammenden Druckschrift DE 25 11 289 A1 ausdrücklich Hydrauliköl als Ausgleichsmedium genannt. Gemäß US 4,613,115 schließlich werden Zweiphasen-Systeme bestimmter Stoffe als Ausgleichsmedium eingesetzt, genauer gesagt Systeme, bei denen die flüssige und die gasförmige Phase des betrachteten Stoffes bei den jeweiligen Druck-Temperatur-Bedingungen koexistieren.

US3782121 offenbart ein Ausgleichsmedium für Gasdruckfedern bei dem die flüssige und die feste Phase koexistieren, jedoch in einem Temperaturbereich zwischen 80°C und 105°C und ohne einwertige Alkohole.

Alle diese Ausgleichsmedien haben sich in der Praxis jedoch als nicht in jeder Hinsicht zufriedenstellend erwiesen. Insbesondere verfügt das herkömmlich eingesetzte mineralische Öl über eine zu geringe nutzbare Volumenausdehnung in dem üblicherweise betrachteten Betriebszustandsfeld der Gasdruckfeder. Bei Zweiphasen-Systemen wird die hauptsächlich von der Gasphase herrührende, hohe Volumenausdehnung durch die starke Kompressibilität der Gasphase wieder zunichte gemacht.

Gemäß EP 1 795 777 A2 ist das Ausgleichsmedium vorzugsweise eine Flüssigkeit kurz unterhalb ihrer Siedetemperatur oder in einem überkritischen Zustand, da eine solche Flüssigkeit einerseits eine relativ große Volumenausdehnung aufweist, andererseits aber auf Grund ihrer Eigenschaft, immer noch eine Flüssigkeit zu sein, im Wesentlichen inkompressibel sind. Als Beispiele für bevorzugte Ausgleichsmedien werden Kohlendioxid ($CO_2$), Ethan ($C_2H_6$), Propan ($C_3H_8$), Schwefelwasserstoff ($H_2S$), Ammoniak ($NH_3$), Methylenchlorid ($CH_3Cl$), Schwefeldioxid ($SO_2$) und Schwefelhexafluorid ($SF_6$) genannt. Nachteilig an diesen Ausgleichsmedien ist jedoch, dass sie, insbesondere da sie leicht flüchtig und teilweise auch korrosiv und/oder toxisch sind, nur mit hohem Aufwand in eine Gasdruckfeder eingebracht und dauerhaft dort gehalten werden können. Darüber hinaus sind viele dieser Ausgleichsmedien leicht entzündlich, was insbesondere für die Verwendung in Fahrzeugen aus Sicherheitsgründen und transportrechtlichen Gründen problematisch ist.

### Technische Aufgabe

Die Aufgabe der Erfindung ist es, eine besonders einfach herstellbare und langlebige Gasdruckfeder und ein Antriebssystem für eine Klappe damit zu schaffen, wobei die Temperaturabhängigkeit der Gasfedercharakteristik zuverlässig kompensiert ist.

### Technische Lösung

Der Gegenstand der vorliegenden Erfindung stellt eine Gasdruckfeder gemäß Anspruch 1 bereit, die die technische Aufgabe löst. Ebenso wird die Aufgabe durch ein Antriebssystem gemäß Anspruch 9 gelöst. Vorteilhafte Ausgestaltungen ergeben sich aus den abhängigen Ansprüchen.

**Beschreibung der Ausführungsarten**

Die Erfindung betrifft eine Gasdruckfeder mit einem Dehnwachs als Ausgleichsmedium zur Verringerung einer Temperaturabhängigkeit einer Federkraft der Gasdruckfeder in einem sich von einer Minimaltemperatur, zwischen -40 °C und + 10 °C, bis zu einer Maximaltemperatur, zwischen +50 °C und +100 °C, erstreckenden Arbeitstemperaturbereich der Gasdruckfeder.

Die Gasdruckfeder kann beispielsweise im Wesentlichen wie die in DE 31 41 295 A1 oder in EP 1 795 777 A2 beschriebenen Gasdruckfedern aufgebaut sein. Die Gasdruckfeder umfasst vorzugsweise einen Arbeitszylinder, der zusammen mit einer Ausgleichskolbenanordnung einen mit einem, insbesondere gasförmigen, Arbeitsmedium gefüllten Arbeitsraum umgrenzt, und einer Arbeitsstange, die durch eine Öffnung des Arbeitszylinders verschiebbar in den Arbeitsraum hineinragt. Dabei wird die Ausgleichskolbenanordnung von dem Druck des Arbeitsmediums und dem Druck des in einem Ausgleichsraum vorgesehenen, sich bei Temperaturerhöhung ausdehnenden Ausgleichsmediums in einem das Volumen des Arbeitsraum vergrößernden Sinne beaufschlagt.

Damit der Ausgleichskolben bei einer Temperaturverringerung reversibel in seine Ausgangsposition zurückkehrt, kann er außerdem von einem in einem Rückstellraum vorgesehenen Rückstellmedium in einem das Volumen des Arbeitsraum verkleinernden Sinne beaufschlagt sein.

Das Dehnwachs erfährt bei einer Temperaturerhöhung innerhalb des Arbeitstemperaturbereichs zumindest einen Phasenübergang, insbesondere von einer wachsartig-festen zu einer flüssigen Phase, mit einer signifikanten relativen Volumenzunahme, beispielsweise um 5 % bis 20 %, insbesondere um 10 % bis 15 %. Dadurch kann die Volumenzunahme des Dehnwachses dazu genutzt werden, den Arbeitsraum der Gasdruckfeder zu vergrößern, um eine Druckzunahme des Arbeitsmediums und damit verbundene Erhöhung der Federkraft der Gasdruckfeder durch die Temperaturerhöhung zu verhindern.

Die relative Volumenzunahme $\delta V$ ist definiert als der Quotient der absoluten Volumenzunahme $\Delta V$ durch das Volumen $V_{Tmin}$ bei der Minimaltemperatur. Die absolute Volumenzunahme $\Delta V$ ist die Differenz des Volumens $V_{Tmax}$ bei der Maximaltemperatur $Tmax$ des Arbeitstemperaturbereichs minus das Volumen $V_{Tmin}$ bei der Minimaltemperatur $Tmin$ des Arbeitstemperaturbereichs:

$$\delta V \ = \Delta V \ / \ V_{Tmin} = (V_{Tmax} - V_{Tmin}) \ / \ V_{Tmin}$$

Für einen Arbeitstemperaturbereich von einer Minimaltemperatur von $Tmin$ = -30 °C bis zu einer Maximaltemperatur von $Tmax$ = +80 °C ergibt sich vorteilhafterweise eine relative Volumenzunahme $\delta V$ von 14 % bis 18 %.

In dieser Anmeldung werden temperaturabhängige Effekte in der Regel am Beispiel einer Temperaturerhöhung beschrieben. Im Allgemeinen wird davon ausgegangen, dass die temperaturabhängigen Effekte reversibel sind, also bei einer Temperaturverringerung im Wesentlichen umgekehrt ablaufen als bei einer Temperaturerhöhung.

Ein Dehnwachs hat gegenüber anderen Arbeitsmedien den Vorteil, dass es aufgrund seiner wachsartigen Konsistenz und geringen chemischen Reaktivität einfach in die Gasdruckfeder eingebracht werden kann. Weiterhin kann es, da es im Arbeitstemperaturbereich fest oder flüssig vorliegt und chemisch wenig reaktiv ist, auf einfache Weise dauerhaft in der Gasdruckfeder eingeschlossen werden, sodass diese langfristig und zuverlässig funktioniert.

Das Dehnwachs umfasst in dem gesamten Arbeitstemperaturbereich zumindest eine flüssige Phase und zumindest eine feste Phase. Durch die Koexistenz zumindest einer festen und zumindest einer flüssigen Phase erfolgt bei einer Temperaturerhöhung eine zumindest näherungsweise lineare Volumenzunahme des Dehnwachses, wodurch die in der Regel ebenfalls näherungsweise lineare Druckzunahme des Arbeitsmediums über den gesamten Arbeitstemperaturbereich nahezu vollständig kompensiert werden kann.

Dadurch, dass über den gesamten Arbeitstemperaturbereich zumindest eine flüssige Phase und zumindest eine feste Phase vorliegt, unterscheidet sich das Dehnwachs von üblicherweise in Thermostatventilen verwendeten Dehnwachsen, bei denen nur in einem möglichst engen Temperaturbereich eine flüssige und eine feste Phase koexistieren sollen, um eine wohldefinierte Schalttemperatur des Thermostatventils zu bewirken.

Die zumindest eine flüssige Phase und die zumindest eine feste Phase sind vorzugsweise miteinander vermischt oder bilden ein Gel, um eine homogene temperaturabhängige Volumenänderung des Ausgleichsmediums zu bewirken und mögliche Grenzflächeneffekte, die die Linearität der Volumenänderung beeinträchtigen könnten, zu vermeiden. Die zumindest eine flüssige Phase und die zumindest eine feste Phase können aber auch durch zumindest eine Phasengrenze räumlich voneinander getrennt sein.

In dieser Anmeldung angegebenen Eigenschaften von Stoffen und Stoffgemischen beziehen sich auf Standarddruck (100 kPa), wenn nichts anderes angegeben ist.

Das Dehnwachs umfasst eine Anzahl von primären Alkoholen. Primäre Alkohole bieten als Ausgleichsmedium eine Reihe von Vorteilen, insbesondere sind sie nicht mit Wasser mischbar und bilden damit einen Korrosionsschutz für die Gasdruckfeder. Außerdem reagieren primäre Alkohole neutral und sind gesundheitlich unbedenklich. Primäre Alkohole mit definierter Kettenlänge und somit definierter Schmelztemperatur sind außerdem sehr gut verfügbar.

Die Minimaltemperatur beträgt vorzugsweise -30 °C bis 0 °C, insbesondere -20 °C bis -10 °C. Die Maximaltemperatur beträgt vorzugsweise +50 °C bis +80 °C, insbesondere +60 °C bis +70 °C. Mit den genannten Minimaltemperaturen und Maximaltemperaturen ergibt sich ein Arbeitstemperaturbereich, der eine Vielzahl typischer Anwendungsbereiche von Gasdruckfedern, insbesondere im Fahrzeugbau, abdeckt, sodass unerwünschte Effekte eine Temperaturabhängigkeit der Federkraft der Gasdruckfeder in typischen Anwendungsbereichen vermieden werden.

Das Dehnwachs umfasst eine Anzahl von Alkanen, vorzugsweise eine Mehrzahl von Alkanen mit voneinander unterschiedlichen Kettenlängen, wobei die Alkane bevorzugt eine minimale Kettenlänge im Bereich von 5 bis 20, besonders bevorzugt 10 bis 15, und eine maximale Kettenlänge im Bereich von 20 bis 35, besonders bevorzugt 25 bis 30, aufweisen.

Das Dehnwachs kann beispielsweise 10 bis 25, insbesondere 15 bis 20, Alkane mit voneinander unterschiedlichen Kettenlängen umfassen.

Alkane bieten als Ausgleichsmedium eine Reihe von Vorteilen, insbesondere sind sie aufgrund der stabilen Kohlenstoffketten ohne funktionelle Gruppen reaktionsträge, ab einer gewissen Kettenlänge nur schwer entflammbar und nur unter Anwesenheit von Katalysatoren spaltbar. Alkane sind weiterhin untereinander mischbar, gesundheitlich unbedenklich, kostengünstig verfügbar und bilden aufgrund ihrer hydrophoben Eigenschaft ab einer Kettenlänge von etwa 16 einen Korrosionsschutz für die Gasdruckfeder.

Darüber hinaus liegen die Schmelztemperaturen von Alkanen mit voneinander benachbarten Kettenlängen nah beieinander. Durch ein weiteres Kohlenstoffatom in der Kette erhöht sich die Schmelztemperatur typischerweise um etwa 3 K. Die enge Abstufung der Schmelztemperaturen erlaubt es, eine besonders gleichmäßige Ausdehnung des Dehnstoffs über den gesamten Arbeitstemperaturbereich einzustellen.

Alkane mit den genannten Kettenlängen weisen über den Arbeitstemperaturbereich der Gasdruckfeder verteilte Schmelztemperaturen auf und stellen dadurch sicher, dass über den gesamten Arbeitstemperaturbereich in dem Ausgleichsmedium zumindest eine flüssige und zumindest eine feste Phase koexistieren. Versuche haben ergeben, dass die Schmelztemperaturen der Alkane in dem Ausgleichsmedium nicht wesentlich von den entsprechenden Schmelztemperaturen der Alkane als Reinstoffe abweichen.

Nachteilig an Alkanen ist, dass aufwändige Trennungsverfahren notwendig sind, um Alkane mit einer genau definierten Kettenlänge oder einer genau definierten Mischung von Kettenlängen zu erhalten.

Das Dehnwachs umfasst vorzugsweise eine Mehrzahl von primären Alkoholen mit voneinander unterschiedlichen Kettenlängen wobei die primären Alkohole bevorzugt eine minimale Kettenlänge im Bereich von 3 bis 15, besonders bevorzugt 5 bis 10, und eine maximale Kettenlänge im Bereich von 10 bis 25, besonders bevorzugt 15 bis 20, aufweisen.

Das Dehnwachs kann beispielsweise 2 bis 15, insbesondere 5 bis 10, primäre Alkohole mit voneinander unterschiedlichen Kettenlängen umfassen.

Primäre Alkohole mit den genannten Kettenlängen weisen über den Arbeitstemperaturbereich der Gasdruckfeder verteilte Schmelztemperaturen auf und stellen dadurch sicher, dass über den gesamten Arbeitstemperaturbereich in dem Ausgleichsmedium zumindest eine flüssige und zumindest eine feste Phase koexistieren. Versuche haben ergeben, dass die Schmelztemperaturen der primären Alkohole in dem Ausgleichsmedium nicht wesentlich von den entsprechenden Schmelztemperaturen der primären Alkohole als Reinstoffe abweichen.

Das Dehnwachs besteht aus einer Anzahl von Alkanen und einer Anzahl von primären Alkoholen mit voneinander unterschiedlichen Kettenlängen. Primäre Alkohole sind im Allgemeinen mit Alkanen mischbar, sodass sich aus primären Alkoholen und Alkanen vorteilhafterweise ein homogenes Dehnwachs erzeugen lässt.

Primäre Alkohole zeichnen sich bei sehr kurzen Kettenlängen von beispielsweise acht bis zehn Kohlenstoffatomen durch einen niedrigen Schmelzpunkt von -16 °C bis 7 °C, bei gleichzeitig relativ hohem Flammpunkt im Verhältnis zu Alkanen mit gleicher Schmelztemperatur aus. Daher kann mit primären Alkoholen eine niedrige Minimaltemperatur erreicht werden, ohne dadurch eine hohe Entflammbarkeit des Dehnwachses zu bewirken.

Außerdem weisen primäre Alkohole schon bei relativ kurzen Kettenlängen von beispielsweise 16 bis 18 Kohlenstoffatomen eine hohe Schmelztemperatur von 49 °C bis 59 °C auf. Die Schmelztemperatur eines Alkans mit 18 Kohlenstoffatomen beträgt dagegen nur 28 °C. Daher kann eine hohe Maximaltemperatur mit relativ kurzkettigen primären Alkoholen erreicht werden. Für die gleiche Maximaltemperatur wären Alkane mit wesentliche größerer Kettenlänge notwendig, die chemisch weniger stabil und teurer wären als die kurzkettigeren primären Alkohole.

Mischungen primärer Alkohole sind in der Regel teurer als Mischungen von Alkanen. Außerdem liegen die Schmelztemperaturen von primären Alkoholen mit benachbarten Kettenlängen weiter auseinander als bei Alkanen. Daher ist es mit primären Alkoholen schwieriger als mit Alkanen eine gleichmäßige Ausdehnung des Dehnwachses über den gesamten Arbeitstemperaturbereich einzustellen.

Um ein möglichst kostengünstiges und sicheres Dehnwachs mit gleichmäßiger Ausdehnung über den gesamtes Arbeitstemperaturbereich zu schaffen, ist es daher besonders vorteilhaft, wenn das Dehnwachs eine Anzahl von primären Alkoholen und eine Anzahl von Alkanen umfasst.

Die Kettenlängen der primären Alkohole und/oder der Alkane liegen vorzugsweise in den zuvor genannten Bereichen. Das Dehnwachs kann beispielsweise primäre Alkohole mit Kettenlängen von 8 bis 18 Kohlenstoffatomen und Alkane mit Kettenlängen von 14 bis 25 Kohlenstoffatomen umfassen oder daraus bestehen.

Die in dem Dehnwachs enthaltenen primären Alkohole umfassen eine Anzahl von primären Alkoholen, die eine niedrigere Schmelztemperatur haben als alle in dem Dehnwachs enthaltenen Alkane, und/oder eine Anzahl von primären Alkoholen, die eine höhere Schmelztemperatur haben als alle in dem Dehnwachs enthaltenen Alkane.

Am oberen und/oder unteren Rand des Arbeitstemperaturbereichs werden also primäre Alkohole anstelle von Alkanen eingesetzt, um eine gleichmäßige Ausdehnung des Dehnwachses sicherzustellen, ohne die Entflammbarkeit und die Kosten des Dehnwachses zu steigern oder die chemische Stabilität des Dehnwachses zu verringern. In einem mittleren Bereich des Arbeitstemperaturbereichs werden dagegen Alkane eingesetzt, um geringe Kosten und durch die eng beieinanderliegende Schmelztemperaturen der Alkane eine gleichmäßige Ausdehnung des Dehnwachses sicherzustellen. Durch diese Kombination von primären Alkoholen und Alkanen werden somit die jeweiligen Vorteile beider Stoffgruppen optimal genutzt.

Die primären Alkohole bilden einen Stoffmengenanteil von 1 % bis 30 %, bevorzugt 10 % bis 25 %, des Dehnwachses. Mit einem solchen Stoffmengenanteil können das erfindungsgemäße Schmelzverhalten des Dehnwachses und eine hohe Anwendungssicherheit der Gasdruckfeder mit geringen Kosten erreicht werden. Ein erfindungsgemäßes Schmelzverhalten wird beispielsweise für ein Dehnwachs, das aus 25 % Octanol und 75 % des im Handel erhältlichen Alkan-Dehnwachses RubiTherm RT35 besteht, erreicht.

Die Erfindung betrifft ein Antriebssystem für eine Klappe mit einer erfindungsgemäßen Gasdruckfeder zur Unterstützung der Klappe und einem elektromechanischen Antrieb, beispielsweise einem Linearantrieb, insbesondere einem Spindelantrieb, zum Antrieb der Klappe. Bei der Klappe kann es sich beispielsweise um eine Klappe eines Fahrzeugs, insbesondere um eine Motorhaube, eine Kofferraumklappe, eine Gepäckraumklappe oder eine Flügeltür, handeln.

Antriebssysteme für eine Klappe mit einer Gasdruckfeder zur Unterstützung der Klappe und einem elektromechanischen Antrieb zum Antrieb der Klappe sind im Stand der Technik bekannt. Bis auf die Verwendung einer erfindungsgemäßen anstelle einer gattungsgemäßen Gasdruckfeder kann das erfindungsgemäße Antriebssystem wie ein entsprechendes Antriebssystem aus dem Stand der Technik, beispielsweise aus DE 103 13 440 A1 oder DE 10 2008 045 903 A1, aufgebaut sein.

Die Gasdruckfeder des Antriebssystems dient dazu, die Klappe in einer beliebigen Stellung gegen die Schwerkraft zu halten, während der elektromechanische Antrieb dazu dient, die Klappe zu öffnen und zu schließen. Zusätzlich kann wie in DE 103 13 440 A1 und DE 10 2008 045 903 A1 eine manuelle Betätigung der Klappe vorgesehen sein.

Die Gasdruckfeder muss eine so hohe Federkraft aufweisen, dass sie Klappe auch bei niedrigen Umgebungstemperaturen halten kann. Da die Federkraft bei üblichen Gasdruckfedern mit steigender Temperatur steigt, führt dies dazu, dass bei hohen Temperaturen von dem elektromechanischen Antrieb oder einem Bediener eine sehr hohe Kraft aufgebracht werden muss, um die Klappe zu schließen. Daher muss das Antriebssystem einen sehr kraftvollen elektromechanischen Antrieb umfassen, der teuer ist, viel Bauraum beansprucht und im Betrieb viel Energie verbraucht. Außerdem kommt es zu einem hohen Verschleiß des elektromechanischen Antriebs und von anderen mit der Klappe mechanisch verbundenen Teilen, beispielsweise Scharnieren.

Im Stand der Technik werden diese Probleme durch Verwendung eines Federbeins anstelle der Gasdruckfeder umgangen (z.B. DE10 2008 045 903 A1, Abs. [0021]). Ein Federbein hat zwar eine nahezu temperaturunabhängige Federkraft, ist aber größer, schwerer und teurer als eine Gasdruckfeder mit vergleichbarer Federkraft.

Durch die Verwendung einer erfindungsgemäßen, temperaturkompensierten Gasdruckfeder anstelle einer fachüblichen Gasdruckfeder wird somit ein besonders kostengünstiges, einfach herstellbares, langlebiges, kompaktes, energiesparendes und einfach zu bedienendes Antriebssystem für eine Klappe geschaffen.

**Kurze Beschreibung der Zeichnungen**

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.

Figur 1 zeigt die relative Volumenänderung eines Dehnwachses einer erfindungsgemäßen Gasdruckfeder abhängig von der Temperatur.

Figur 2 zeigt die relative Volumenänderung eines weiteren Dehnwachses einer erfindungsgemäßen Gasdruckfeder abhängig von der Temperatur.

**Fig.1**

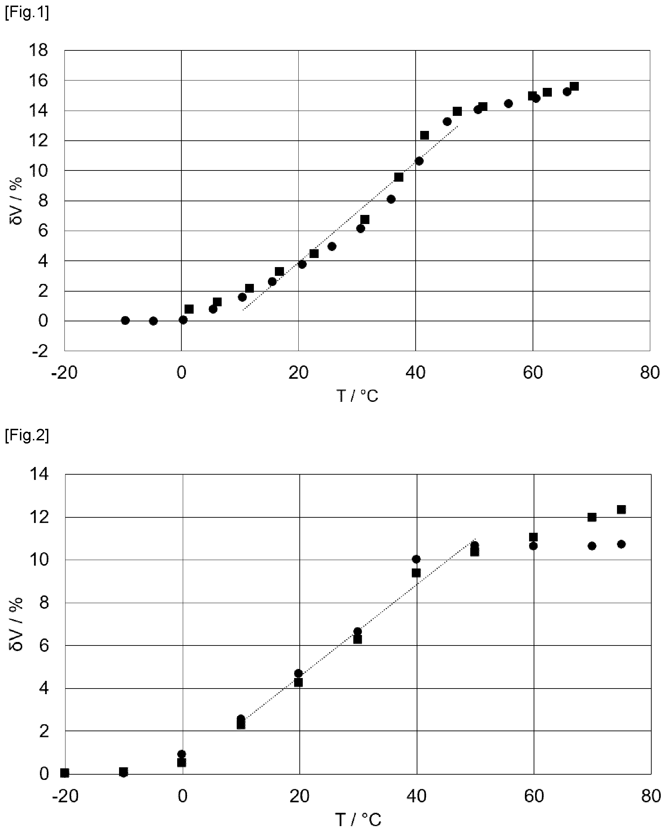

Figur 1 zeigt die relative Volumenänderung $\delta V$ in % eines Dehnwachses einer erfindungsgemäßen Gasdruckfeder abhängig von der Temperatur $T$ in °C.

Das für Figur 1 untersuchte Dehnwachs wurde durch Vermischung der im Handel erhältlichen Wachse RubiTherm RT35, Mahle-Beer und Paramelt Dilavest 0-30 zu gleichen Anteilen hergestellt und enthält die in folgender Tabelle 1 aufgelisteten Alkane. Die Stoffmengenanteile wurden mit Gas-Chromatographie bestimmt.

Tabelle 1:

| Name | Kettenlänge | Schmelztemperatur / °C | Stoffmengenanteil / % |
|---|---|---|---|
| n-Dodecan | 12 | -10 | 0,0 |
| n-Tridecan | 13 | -5 | 0,1 |
| n-Tetradecan | 14 | 6 | 9,5 |
| n-Pentadecan | 15 | 9 | 6,2 |
| n-Hexadecan | 16 | 18 | 3,9 |
| n-Heptadecan | 17 | 21 | 6,5 |
| n-Octadecan | 18 | 28 | 15,8 |
| n-Nonadecan | 19 | 32 | 9,1 |
| n-Eicosan | 20 | 37 | 10,4 |
| n-Heneicosan | 21 | 40 | 11,2 |
| n-Docosan | 22 | 44 | 9,1 |
| n-Tricosan | 23 | 48 | 6,1 |
| n-Tetracosan | 24 | 50 | 4,4 |
| n-Pentacosan | 25 | 54 | 3,1 |
| n-Hexacosan | 26 | 56 | 1,8 |
| n-Heptacosan | 27 | 59 | 0,8 |
| n-Octacosan | 28 | 61 | 0,3 |
| n-Nonacosan | 29 | 64 | 0,3 |
| n-Triacontan | 30 | 65 | 0,0 |
| **Summe** | | | 98,5 |

Zur Messung der Temperaturabhängigkeit des Volumens des Dehnwachses wurde bei einer Ausgangstemperatur von -10 °C ein Ausgangsvolumen von 3198,4 mm$^3$ des Dehnwachses in eine zylindrische Messkartusche (6 mm Innendurchmesser, 114 mm Innenlänge) mit einem zylindrischen Stößel (3,98 mm Durchmesser, 12,4 mm$^2$ Querschnittsfläche) eingefüllt.

Die Messkartusche wurde in einem Temperier-Ofen einer Temperaturrampe unterzogen. Bei jeder untersuchten Temperatur wurde nach einer Wartezeit von ca. 20 min mit einem Wegaufnehmer der Weg, um den der Stößel gegenüber der Ausgangstemperatur durch die Ausdehnung des Dehnwachses gegen eine Gegenkraft von 3 N aus der Kartusche ausgetrieben wurde, aufgenommen.

Die relative Volumenänderung des Dehnwachses wurde als Produkt aus dem aufgenommenen Weg mit der Querschnittsfläche des Stößels dividiert durch das Ausgangsvolumen berechnet. Figur 1 zeigt die so erhaltenen Werte für die Erwärmung (Kreise) und Abkühlung (Quadrate) des Dehnwachses.

Die wesentlichen Bestandteile (Stoffmengenanteil > 5 %) des für Figur 1 untersuchten Dehnwachses weisen Schmelztemperaturen im Bereich von 6 °C bis 48 °C auf (Tabelle 1). Dementsprechend umfasst das Dehnwachs in einem gesamten Arbeitstemperaturbereich von ca. 10 °C bis ca. 50 °C zumindest eine feste und zumindest eine flüssige Phase.

Daraus ergibt sich, wie in Figur 1 erkennbar ist, eine näherungsweise lineare relative Volumenzunahme mit steigender Temperatur in dem Arbeitstemperaturbereich. Eine lineare Regression (gepunktete Linie) der Messdaten in diesem Bereich zeigt einen Korrelationskoeffizienten von $R^2 = 0,96$.

Insgesamt wird über den untersuchten Temperaturbereich von -10 °C bis +60 °C eine relative Volumenzunahme von 15 % erreicht, was ausreichend ist, um die Temperaturabhängigkeit der Gasdruckfeder zu kompensieren. Mit einer relativen Volumenzunahme um 15 % ist es bei geeigneten Übersetzungsverhältnissen in der Konstruktion möglich einen Ausgleichshub zu realisieren, welcher ausreichend ist die Temperaturabhängigkeit der Gasfeder vollständig zu kompensieren oder sogar zu überkompensieren.

Eine Überkompensation bietet die Möglichkeit sehr flexibel zu arbeiten und durch Mischen mit entsprechenden Ölen mit geringerer Volumenzunahme die genau gewünschte Ausdehnung für jeden Gasdruckfedertyp passend einzustellen.

**Fig.2**

Figur 2 zeigt die relative Volumenänderung $\delta V$ in % eines weiteren Dehnwachses einer erfindungsgemäßen Gasdruckfeder abhängig von der Temperatur $T$ in °C.

Das für Figur 2 untersuchte Dehnwachs wurde durch Vermischung dreier im Handel erhältlicher Wachse der Firma Orbesen mit Schmelzbereichen von 6 °C bis 12 °C, von 15 °C bis 40 °C und von 56 °C bis 62 °C zu gleichen Anteilen hergestellt und enthält die in folgender Tabelle 2 aufgelisteten primären Alkohole. Die Stoffmengenanteile wurden mit Gas-Chromatographie bestimmt.

Tabelle 2:

| Name | Kettenlänge | Schmelztemperatur / °C | Stoffmengenanteil / % |
|---|---|---|---|
| **n-Octanol** | 8 | -16 | 0,0 |
| **n-Decanol** | 10 | 7 | 43,8 |
| **n-Dodecanol** | 12 | 24 | 0,0 |
| **n-Tetradecanol** | 14 | 38 | 24,0 |
| **n-Hexadecanol** | 16 | 49 | 31,4 |
| **n-Octadecanol** | 18 | 59 | 0,0 |
| **Summe** | | | 99,3 |

Die relative Volumenänderung des Dehnwachses wurde ebenso bestimmt, wie zu Figur 1 beschrieben. Im Unterschied zu Figur 1 wurde eine Ausgangstemperatur von -20 °C gewählt.

Die wesentlichen Bestandteile (Stoffmengenanteil > 5 %) des für Figur 1 untersuchten Dehnwachses weisen Schmelztemperaturen im Bereich von 7 °C bis 59 °C auf (Tabelle 2). Dementsprechend umfasst das Dehnwachs in einem gesamten Arbeitstemperaturbereich von ca. 10 °C bis ca. 50 °C zumindest eine feste und zumindest eine flüssige Phase.

Daraus ergibt sich wie in Figur 2 erkennbar ist eine näherungsweise lineare relative Volumenzunahme mit steigender Temperatur in dem Arbeitstemperaturbereich. Eine lineare Regression (gepunktete Linie) der Messdaten in diesem Bereich zeigt einen Korrelationskoeffizienten von $R^2 = 0,98$.

Insgesamt wird über den untersuchten Temperaturbereich von -20 °C bis +75 °C eine relative Volumenzunahme von 12 % erreicht, was ausreichend ist, um die Temperaturabhängigkeit der Gasdruckfeder zu kompensieren oder sogar zu überkompensieren.

**Patentansprüche**

1. Gasdruckfeder mit einem Dehnwachs als Ausgleichsmedium zur Verringerung einer Temperaturabhängigkeit einer Federkraft der Gasdruckfeder in einem sich von einer Minimaltemperatur zwischen -40 °C und + 10 °C bis zu einer Maximaltemperatur zwischen +50 °C und +100 °C erstreckenden Arbeitstemperaturbereich der Gasdruckfeder, **dadurch gekennzeichnet, dass**

   a. das Dehnwachs in dem gesamten Arbeitstemperaturbereich zumindest eine flüssige Phase und zumindest eine feste Phase umfasst,
   b. wobei das Dehnwachs aus einer Anzahl von Alkanen und einer Anzahl von primären Alkoholen mit voneinander unterschiedlichen Kettenlängen besteht,

c. wobei die primären Alkohole einen Stoffmengenanteil von 10 % bis 30 % des Dehnwachses bilden, und

d. wobei die in dem Dehnwachs enthaltenen primären Alkohole

    i. eine Anzahl von primären Alkoholen umfassen, die eine niedrigere Schmelztemperatur haben als alle in dem Dehnwachs enthaltenen Alkane, und/oder

    ii. eine Anzahl von primären Alkoholen umfassen, die eine höhere Schmelztemperatur haben als alle in dem Dehnwachs enthaltenen Alkane.

**2.** Gasdruckfeder nach Anspruch 1,
**dadurch gekennzeichnet, dass**
die Minimaltemperatur -30 °C bis 0 °C, bevorzugt -20 °C bis -10 °C, beträgt.

**3.** Gasdruckfeder nach Anspruch 1 oder 2,
**dadurch gekennzeichnet, dass**
die Maximaltemperatur +50 °C bis +80 °C, bevorzugt +60 °C bis +70 °C, beträgt.

**4.** Gasdruckfeder nach einem der Ansprüche 1 bis 3,
**dadurch gekennzeichnet, dass**
das Dehnwachs eine Mehrzahl von Alkanen mit voneinander unterschiedlichen Kettenlängen umfasst.

**5.** Gasdruckfeder nach einem der Ansprüche 1 bis 4,
**dadurch gekennzeichnet, dass**
die Alkane eine minimale Kettenlänge im Bereich von 5 bis 20, bevorzugt 10 bis 15, und eine maximale Kettenlänge im Bereich von 20 bis 35, bevorzugt 25 bis 30, aufweisen.

**6.** Gasdruckfeder nach einem der Ansprüche 1 bis 5,
**dadurch gekennzeichnet, dass**
die primären Alkohole einen Stoffmengenanteil von 10 % bis 25 % des Dehnwachses bilden.

**7.** Gasdruckfeder nach einem der Ansprüche 1 bis 6,
**dadurch gekennzeichnet, dass**
das Dehnwachs eine Mehrzahl von primären Alkoholen mit voneinander unterschiedlichen Kettenlängen umfasst.

**8.** Gasdruckfeder nach einem der Ansprüche 1 bis 7,
**dadurch gekennzeichnet, dass**
die primären Alkohole eine minimale Kettenlänge im Bereich von 3 bis 15, bevorzugt 5 bis 10, und eine maximale Kettenlänge im Bereich von 10 bis 25, bevorzugt 15 bis 20, aufweisen.

**9.** Antriebssystem für eine Klappe, umfassend

    a. eine Gasdruckfeder nach einem der Ansprüche 1 bis 8 zur Unterstützung der Klappe und

    b. einen elektromechanischen Antrieb, bevorzugt einen Spindelantrieb, zum Antrieb der Klappe.

**Claims**

**1.** A gas pressure spring comprising an expanding wax as a compensating medium for reducing a temperature dependency of a spring force of the gas pressure spring in an operating temperature range of the gas pressure spring spanning a minimum temperature of -40 °C to +10 °C up to a maximum temperature of +50 °C to +100° C
**characterised in that**

    a. the expanding wax comprises at least one liquid phase and at least one solid phase in the entire operating temperature range;

    b. wherein the expanding wax is composed of a number of alkanes and a number of primary alcohols having chain lengths which differ from each other,

    c. wherein the primary alcohols constitute a percentage of 10 % to 30 % of the substance amount of the expanding wax; and

    d. wherein the primary alcohols contained in the expanding wax

i. comprise a number of primary alcohols having a lower melting temperature than all alkanes contained in the expanding wax, and/or

ii. comprise a number of primary alcohols having a higher melting temperature than all alkanes contained in the expanding wax.

2. The gas pressure spring according to claim 1,
**characterised in that**
the minimum temperature is -30 °C to 0 °C, preferably or -20 °C to -10 °C.

3. The gas pressure spring according to claim 1 or 2,
**characterised in that**
the maximum temperature is +50 °C to +80 °C, preferably +60 °C to +70 °C.

4. The gas pressure spring according to any of claims 1 to 3,
**characterised in that**
the expanding wax comprises a plurality of alkanes having chain lengths which differ from each other.

5. The gas pressure spring according any of claims 1 to 4,
**characterised in that**
the alkanes have a minimum chain length within the range of 5 to 20, preferably of 10 to 15; and a maximum chain length within the range of 20 to 35, preferably of 25 to 30.

6. The gas pressure spring according to any of claims 1 to 5,
**characterised in that**
the primary alcohols constitute a percentage of 10 % to 25 % of the substance amount of the expanding wax.

7. The gas pressure spring according to any of claims 1 to 6,
**characterised in that**
the expanding wax comprises a plurality of primary alcohols having chain lengths which differ from each other.

8. The gas pressure spring according to any of claims 1 to 7,
**characterised in that**
the primary alcohols have a minimum chain length within the range of 3 to 15, preferably of 5 to 10; and a maximum chain length within the range of 10 to 25, preferably from 15 to 20.

9. A drive system for a flap comprising:

a. a gas pressure spring according to one of the claims 1 to 8 for supporting the flap; and
b. an electromechanical drive, preferably a spindle drive, for driving the flap.

**Revendications**

1. Ressort à gaz avec une cire d'expansion comme milieu de compensation pour réduire une dépendance de la température d'une force élastique du ressort à gaz dans une plage de température de travail du ressort à gaz s'étendant d'une température minimale entre -40 °C et +10 °C jusqu'à une température maximale entre +50 °C et +100 °C,
**caractérisé en ce que**

a. la cire d'extension comprend au moins une phase liquide et au moins une phase solide dans toute la plage de température de travail,
b. ladite cire d'extension étant constituée d'un certain nombre d'alcanes et d'un certain nombre d'alcools primaires ayant des longueurs de chaîne différentes les unes des autres,
c. les alcools primaires constituant une fraction molaire de 10 % à 30 % de la cire d'expansion, et
d. les alcools primaires contenus dans la cire d'expansion

i. comprenant un certain nombre d'alcools primaires qui ont une température de fusion inférieure à celle de tous les alcanes contenus dans la cire d'expansion, et/ou

ii. comprenant un certain nombre d'alcools primaires qui ont une température de fusion supérieure à celle de tous les alcanes contenus dans la cire d'expansion.

2. Ressort à gaz selon la revendication 1,
**caractérisé en ce que**
la température minimale est de -30 °C à 0 °C, de préférence de -20 °C à -10 °C.

3. Ressort à gaz selon la revendication 1 ou 2,
**caractérisé en ce que**
la température maximale est de +50 °C à +80 °C, de préférence de +60 °C à +70 °C.

4. Ressort à gaz selon l'une des revendications 1 à 3,
**caractérisé en ce que**
la cire d'expansion comprend une pluralité d'alcanes ayant des longueurs de chaîne différentes les unes des autres

5. Ressort à gaz selon l'une des revendications 1 à 4,
**caractérisé en ce que**
les alcanes présentent une longueur de chaîne minimale dans la plage de 5 à 20, de préférence de 10 à 15 ; et une longueur de chaîne maximale dans la plage de 20 à 35, de préférence de 25 à 30.

6. Ressort à gaz selon l'une des revendications 1 à 5,
**caractérisé en ce que**
les alcools primaires constituent une fraction molaire de 10 % à 25 % de la cire d'expansion.

7. Ressort à gaz selon l'une quelconque des revendications 1 à 6,
**caractérisé en ce que**
la cire d'expansion comprend une pluralité d'alcools primaires ayant des longueurs de chaîne différentes les unes des autres.

8. Ressort à gaz selon l'une quelconque des revendications 1 à 7,
**caractérisé en ce que**
les alcools primaires présentent une longueur de chaîne minimale dans la plage de 3 à 15, de préférence de 5 à 10 ; et une longueur de chaîne maximale dans la plage de 10 à 25, de préférence de 15 à 20.

9. Système d'entraînement pour un volet, comprenant

a. un ressort à gaz selon l'une des revendications 1 à 8 pour soutenir le volet ; et
b. un entraînement électromécanique, de préférence un entraînement à broche, pour l'entraînement du volet.

[Fig.1]

[Fig.2]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1795777 A2
- DE 3141295 A1
- DE 2511289 A1
- US 4613115 A
- US 3782121 A
- DE 10313440 A1
- DE 102008045903 A1